# EUROPEAN PATENT APPLICATION

(11) **EP 4 254 140 A1**
(43) Date of publication of application: **04.10.2023**
(21) Application number: 22166341.2
(22) Date of filing: 01.04.2022
(51) Int. Cl.: G06F 3/01

(54) **SYSTEM AND METHOD FOR GENERATING TEXT DATA FROM LIMB MOTIONS**

(71) Applicant: ETH Zürich, 8092 Zürich ETH-Zentrum (CH)
(72) Inventor: HOLZ, Christian, 8044 Zürich (CH); STRELI, Paul, 8032 Zürich (CH); FENDER, Andreas, 8006 Zürich (CH); JIANG, Jiaxi, 8001 Zürich (CH); MEIER, Manuel, 5430 Wettingen (CH)
(74) Representative: Frei Patent Attorneys

(57) **Abstract**

The method for generating **text data** from **limb motions,** comprises
- **sensing** the limb motions;
- producing a **sensor data stream;**
- **identifying** in an **input data stream** derived from the sensor data stream **typing event portions** indicative of a **typing event** each;
- **classifying** the typing event portions into **typing event classes;**
- **estimating** for each of the typing event portions, and for each of the typing event classes,
- a probability, referred to as **class probability value (pC),** that the respective typing event portion is to be classified into the respective typing event class;
- **deriving,** for each of the typing event portions, a **set of character sequences;**
- **estimating,** for the character sequences, a **language probability value (pL)** related to a probability of occurrence of the respective character sequence; and
deriving, for at least a recent-most typing event portion, a text output in dependence of
- the set of character sequences associated with the recent-most typing event portion and the respective language probability value (pL);
- mapping data associating each of the typing event classes with one or more characters;
- the class probability value (pC) associated with the recent-most typing event portion; and
- the one or more class probability values (pC) associated with one or more **earlier typing event portions.**

## Description

The invention relates to the field of data entry systems, more particularly to generating text data from limb motions. It relates to methods and systems according to the opening clauses of the claims. Such systems can find application when text shall be entered, such as in operating computers or in communication.

From US 2020/264707 A1 and further patent applications by that same applicant, chorded data entry systems are known. For operating these systems which are attached to a user's fingers, the user has to learn specific finger movements required for entering characters. These movements differ from the movements used in commonly known touch typing (touch keyboarding).

In US 8 982 104 B1 is described a touch typing emulator for use on a surface, comprising two wave sensors adapted to be placed upon the surface and to determine a typing key intended to be struck by a user.

In the publication "TapID: Rapid Touch Interaction in Virtual Reality using Wearable Sensing" by M. Meier et al. (Meier, Manuel, Paul Streli, Andreas Fender, and Christian Holz: "TapID: Rapid Touch Interaction in Virtual Reality using Wearable Sensing.", 2021 IEEE Virtual Reality and 3D User Interfaces (VR), pp. 519-528, IEEE, 2021), a Virtual Reality (VR) system is presented in which a user wearing head-mounted VR system, such as VR glasses, perceives a virtual keyboard by means of the VR glasses. A core challenge of touch interaction in such VR systems is the precise detection of touch events when the hands are tracked from the head-mounted VR system itself. In said publication, it is proposed to include a sensing system for detecting tapping events enabling to identify the tapping finger. Combining the information regarding the location of each finger relative to the virtual keyboard, as derived by the head-mounted VR system, with the information regarding the identification of the finger which tapped on a surface as derived by the sensing system, yields a reliable and quick identification of the virtual key tapped by the user.

The inventors contemplated a new way of data entry, i.e. of generating text data, which can be operated without VR technology and which can rely on commonly known touch typing (also known as blind typing or touch keyboarding), such that a user can make use of his or her muscle memory as used during touch typing on an ordinary hardware keyboard.

One object of the invention is to create a new way of generating text data, in particular to provide a respective system and a respective method.

Another object of the invention is to provide a way of generating text data where a user who is capable of touch typing can make use of his or her muscle memory as used during touch typing on an ordinary keyboard.

Another object of the invention is to provide a way of generating text data which can readily be used by a user who is capable of touch typing, without having to learn a completely new way of data entry.

Another object of the invention is to provide a way of generating text data which can be accomplished in a socially well-accepted way.

Another object of the invention is to provide a way of generating text data which can be used very versatilely.

Another object of the invention is to provide a way of generating text data which can work without visible feedback to the user regarding typed characters.

Another object of the invention is to provide a way of generating text data by typing on a surface free from human-perceivable indications of a keyboard.

Another object of the invention is to provide a way of generating text data which can work without an imaging sensor for at least two-dimensional imaging.

Another object of the invention is to provide a way of generating text data which provides haptic feedback to a user during typing, in absence of a keyboard.

Another object of the invention is to provide a way of generating text data which can enable a user to rest, during typing, his or her lower arms and/or elbows down on the surface on which the user types.

Another object of the invention is to provide a way of generating text data which resembles entering text on a physical keyboard.

Another object of the invention is to provide a way of generating text data which is not particularly fatiguing and thus supports prolonged text entry sessions.

Another object of the invention is to provide a way of generating text data which is approximately as little fatiguing as entering text on a conventional physical keyboard.

Another object of the invention is to provide a way of generating text data which can be used with very little preparations or preconditions.

Another object of the invention is to provide a way of generating text data which can be used practically ubiquitously.

Another object of the invention is to provide a way of generating text data with the aid of one or more sensors which can be placed in a socially acceptable and/or convenient and/or non-invasive and/or unobtrusive manner.

Another object of the invention is to provide a way of generating text data which can make possible fast text entry with all ten fingers.

Further objects and various advantages emerge from the description and embodiments below.

At least one of these objects is at least partially achieved by systems and methods according to the patent claims.

The invention can be described in a couple of slightly different ways. Therefore, we herein describe three different views of the invention: a first view, a second view and a third view.

The **system** for generating **text data** from **limb motions** comprises
- a **sensing unit** comprising at least one **sensor,** configured for producing a **sensor data stream** in response to the limb motions;
- an **event detector** configured for receiving the sensor data stream or a data stream derived therefrom as an **input data stream,** and for identifying portions of the input data stream, referred to as **typing event portions,** which are indicative of a **typing event** each;
- a **classifying unit,** configured for classifying each of the typing event portions into a **set of typing event classes** and for estimating and outputting, for each of the typing event portions, and for each of the typing event classes,
   - a probability, referred to as **class probability value,** that the respective typing event portion is to be classified into the respective typing event class;
- a **language model unit;**
- a **language decoding unit** configured for receiving the class probability values for each of the typing event portions and for deriving, for each of the typing event portions, a **set of character sequences,** and for outputting the sets of character sequences to the language model unit.

The language model unit is configured for estimating, for each of the character sequences, a probability, referred to as **language probability value,** related to a probability of occurrence of the respective character sequence, and for outputting the language probability values to the language decoding unit.

And the language decoding unit is configured
(a) for receiving the language probability values.

In the **first view** of the invention, the language decoding unit is furthermore configured
(b1) for deriving, provided a **set of N successive typing event portions** is identified by the event detector, N being an integer with N ≥ 1, in particular with N ≥ 2, a **text output** for each of the N successive typing event portions, the successive typing event portions being referred to as first to N-th typing event portion in accordance with their succession in time, the corresponding text outputs being referred to as first to N-th text output, wherein the deriving of an n-th text output, n being an integer with 1 ≤ n ≤ N, is accomplished in dependence of
- the set of character sequences associated with the n-th typing event portion;
- for each of the character sequences of the set of character sequences associated with the n-th typing event portion: the respective language probability value;
- the class probability values associated with the **first to n-th** typing event portions;
- **mapping data** associating each of the typing event classes with one or more characters;
and more particularly in dependence of
- the sets of character sequences associated with any of the first to the n-th typing event portions;
- for each of the character sequences of the sets of character sequences associated with any of the first to the n-th typing event portions: the respective language probability value;
- the class probability values associated with the **first to n-th** typing event portions;
- **mapping data** associating each of the typing event classes with one or more characters.

And the text data are comprised in at least one of the text outputs, in particular the text data are comprised in the text output for the N-th typing event portion.

Accordingly, in the **first view** of the invention, the method for generating **text data** from **limb motions** comprises
- **sensing** the limb motions;
- producing a **sensor data stream** in response to the sensing;
- **identifying** in an **input data stream,** which is the sensor data stream or a data stream derived from the sensor data stream, **portions** of the input data stream, referred to as **typing event portions,** which are indicative of a **typing event** each;
- **classifying** each of the typing event portions into a **set of typing event classes;**
- **estimating** for each of the typing event portions, and for each of the typing event classes,
   - a probability, referred to as **class probability value,** that the respective typing event portion is to be classified into the respective typing event class;
- **deriving,** for each of the typing event portions, a **set of character sequences;**
- **estimating,** for each of the character sequences, a probability, referred to as **language probability value,** related to a probability of occurrence of the respective character sequence; and
(B1) deriving, provided a **set of N successive typing event portions** is identified in an input data stream, N being an integer with N ≥ 1, in particular with N ≥ 2, a **text output** for each of the N successive typing event portions. The successive typing event portions are referred to as first to N-th typing event portion in accordance with their succession in time. The corresponding text outputs are referred to as first to N-th text output. The deriving of an n-th text output, n being an integer with 1 ≤ n ≤ N, is accomplished in dependence of the magnitudes enumerated above for the system (in the first view), i.e. in dependence of
- the set of character sequences associated with the n-th typing event portion;
- for each of the character sequences of the set of character sequences associated with the n-th typing event portion: the respective language probability value;
- the class probability values associated with the **first to n-th** typing event portions;
- **mapping data** associating each of the typing event classes with one or more characters;
and more particularly in dependence of
- the sets of character sequences associated with any of the **first to the n-th** typing event portions;
- for each of the character sequences of the sets of character sequences associated with any of the **first to the n-th** typing event portions: the respective language probability value;
- the class probability values associated with the **first to n-th** typing event portions;
- **mapping data** associating each of the typing event classes with one or more characters.

And the text data are comprised in at least one of the text outputs, in particular the text data are comprised in the text output for the N-th typing event portion.

For clarification: The "deriving" mentioned in features (b1) and (B1) shall not imply that in any case when a set of N successive typing event portions is identified, the deriving is carried out in the described way. This can depend on further conditions. In other words, the deriving is carried out as the case may be, in the described way, i.e. depending on circumstances.

With reference to "successive" typing event portions mentioned in this text, these are, more particularly, typing event portions which are identified by the event detector as successive typing event portions in the input data stream, i.e. they are typing event portions successively following one another (often with distances in time in between) in the input data stream.

As to the **integer N,** its value it depends on the circumstances. In some embodiments, N assumes a value of at least two (N ≥ 2), more particularly N assumes, at least under certain conditions, the value of 2. In some embodiments, N assumes a value of at least three (N ≥ 3), more particularly N assumes, at least under certain conditions, the value of 3.

In the **second view** of the invention, feature (b1) described above for the first view is replaced by the following feature (b2). I.e. the language decoding unit is furthermore configured
(b2) for deriving, **for each of the typing event portions,** a **text output** in dependence of
- the set of character sequences associated with the respective typing event portion, and more particularly: the set of character sequences associated with the respective typing event portion and, depending on further conditions, the sets of character sequences associated with any of the earlier typing event portions;
- for each of the character sequences of the set of character sequences associated with the respective typing event portion: the respective language probability value, and more particularly: for each of the character sequences of the set of character sequences associated with the respective typing event portion and, depending on further conditions, for each of the character sequences of the sets of character sequences associated with any of the earlier typing event portions: the respective language probability value;
- mapping data associating each of the typing event classes with one or more characters;
- the class probability value associated with the respective typing event portion; and
- depending on further conditions, the class probability values associated with one or more typing event portions identified earlier in the input data stream, referred to as **earlier typing event portions;**
the text data being comprised in the text output.

Accordingly, in the second view, the text output is derived, for each of the typing event portions, in dependence of the class probability value associated with the respective typing event portion, and, for some of the typing event portions, as the case may be, also in dependence of the class probability values associated with earlier typing event portions, i.e. with typing event portions identified, by the event detector, earlier in the input data stream than the respective typing event portion.

In other words, in the second view, the text output is derived, for each of the typing event portions, in dependence of the class probability value associated with the respective typing event portion, and, for a subset of the typing event portions, also in dependence of the class probability values associated with earlier typing event portions. In instances, the subset may be (but does not need to be) identical with the set formed by all of the typing event portions.

Accordingly, in the **second view** of the invention, the method is like described above for the first view, but step (B1) is replaced by the following step (B2):
(B2) deriving, **for each of the typing event portions,** a **text output** in dependence of
- the set of character sequences associated with the respective typing event portion, and more particularly: the set of character sequences associated with the respective typing event portion and, depending on further conditions, the sets of character sequences associated with any of the earlier typing event portions;
- for each of the character sequences of the set of character sequences associated with the respective typing event portion: the respective language probability value, and more particularly: for each of the character sequences of the set of character sequences associated with the respective typing event portion and, depending on further conditions, for each of the character sequences of the sets of character sequences associated with any of the earlier typing event portions: the respective language probability value;
- mapping data associating each of the typing event classes with one or more characters;
- the class probability value associated with the respective typing event portion; and
- depending on further conditions, the class probability values associated with one or more typing event portions identified earlier in the input data stream, referred to as **earlier typing event portions;**
the text data being comprised in the text output.

In the **third view** of the invention, feature (b1) described above for the first view is replaced by the following feature (b3). I.e. the language decoding unit is furthermore configured
(b3) for deriving, for at least one of the typing event portions referred to as **recent-most typing event portion,** a **text output** in dependence of
- the set of character sequences associated with the recent-most typing event portion, and more particularly: the sets of character sequences associated with the recent-most typing event portion or with any of the earlier typing event portions;
- for each of the character sequences of the set of character sequences associated with the recent-most typing event portion: the respective language probability value, and more particularly: for each of the character sequences of the set of character sequences associated with the recent-most typing event portion or with any of the earlier typing event portions: the respective language probability value;
- **mapping data** associating each of the typing event classes with one or more characters;
- the class probability value associated with the recent-most typing event portion; and
- the one or more class probability values associated with one or more typing event portions identified earlier in the input data stream, referred to as earlier **typing event portions.**

The text data is comprised in the text output. In particular, the recent-most typing event portion and the one or more earlier typing event portions are successive typing event portions.

Accordingly, in the third view, at least for the recent-most typing event portion, the text output is derived in dependence of the items enumerated in feature (b3), whereas for other typing event portions, the text output may be derived differently, e.g., not in dependence of the class probability values associated with an earlier typing event portion.

Accordingly, in the **third view** of the invention, the method is like described above for the first view, but step (B1) is replaced by the following step (B3):
(B3) **deriving,** for at least one of the typing event portions referred to as **recent-most typing event portion,** a **text output** in dependence of
- the set of character sequences associated with the recent-most typing event portion, and more particularly: the sets of character sequences associated with the recent-most typing event portion or with any of the earlier typing event portions;
- for each of the character sequences of the set of character sequences associated with the recent-most typing event portion: the respective language probability value, and more particularly: for each of the character sequences of the set of character sequences associated with the recent-most typing event portion or with any of the earlier typing event portions: the respective language probability value;
- **mapping data** associating each of the typing event classes with one or more characters;
- the class probability value (pC) associated with the recent-most typing event portion; and
- the one or more class probability values (pC) associated with one or more typing event portions identified earlier in the input data stream, referred to as **earlier typing event portions;**
wherein the text data are comprised in the text output.

The method can comprise, in any of the views, storing the text data in the system, such as in a memory unit of the system.

In an **example for illustrative purposes,** independent from the respective view of the invention, roughly spoken, a user's limb motions, e.g., finger motions, are sensed and analyzed, wherein portions of the respective data stream are identified, which are linked to typing events. And by classification, different classes of motions and typing events, respectively, are distinguished, e.g., identifying motions of different fingers of the user. This may be accomplished, e.g., similarly to what is described in the publication by M. Meier et al. mentioned to above.

However, for each typing event, a probability (class probability value) is determined for each of the classes (typing event classes) and used in the process, which indicates how likely it is that the typing event to correctly to attibuted to the respective class.

Furthermore, for each typing event, a set of character sequences is produced and, using a language model, a probability of the occurrence of each respective character sequence, e.g., in natural language, is determined (language probability value). Length and content of the character sequences in the set usually depend on the history, such as on previous typing events and on further user input to the system. In addition, it can depend on the current (recent-most) typing event. In a simple example, for a first typing event, the set of character sequences could simply be {"A", "B", "C", "D",...}. For example, in English, the language model would return, e.g., a higher language probability value for the character sequence "I" than for the character sequence "K".

Furthermore, for each typing event, a text output is generated, e.g., a set of strings, such as a selection of strings (character sequences) comprised in the set of character sequences mentioned before, which, e.g., can be presented to the user. How is this text output determined? What does it depend on? It is derived in dependence of
- the set of character sequences and the associated occurrence probability (language probability value);
- the class probability values (for all the classes) associated with the respective typing event and, as the case may be, the class probability values associated with earlier typing events;
- **mapping data** which map each character onto one or more of the typing event classes, e.g., like given by a touch-type scheme for a standard keyboard, such that, e.g., the character "S" is mapped onto a typing event class associated with a movement of a user's left ring finger; alternatively, the mapping data could map each of the typing event classes onto one or more characters, e.g., like given by a touch-type scheme for a standard keyboard, such that, e.g., a typing event class associated with a movement of a user's left ring finger is mapped onto characters "2", "W", "S", "X".

Combining all this can result in a well-functioning system. Ambiguities occurring in the classification, represented by the class probability values, can be dealt with and, in fact, can be very valuable, in particular in combination with the inclusion of the previous typing events and their respective class probability values and in combination with the inclusion of the language model.

As can be seen easily, after three or four typing events already, a very high number of possible character combinations exists, but the invention makes possible, due to weighting by probabilties, to handle this number well or to reduce this number to a number which can be handled well:
For each single typing event already, a large number of characters may have to be taken into account, as it may be attributable to a couple of typing event classes, and each of the typing event classes may be attributable to a couple of characters. But the class probability values and, if provided, the mapping probability values (cf. below for details), create a ranking (by weighting) among the large number of possible characters. E.g., the characters can be ranked according to a ranking magnitude, wherein the ranking magnitude for a specific character can be, e.g., the sum, over all typing event classes (indexed i), of the product pCᵢ times pMᵢ of the respective class probability value pCᵢ regarding the respective typing event class i and the mapping probability value pMᵢ for the specific character and typing event class i, indicative of the probability that typing event class i is associated with the specific character.

After a couple of typing events, the number of possible strings is immense. But with the language probability values (pL, from the language model), an additional possibility for ranking among the strings is available. And combining this ranking (by pL) with the ranking (by the sum over product pCᵢ ^{∗} pMᵢ described above) for each character of the respective string, e.g., by summing up terms comprising pL and terms comprising said sum over product pCᵢ ^{∗} pMᵢ described above, results in a ranking of the strings which is impactful and robust. Likelihood is large that the intended string is found and highly ranked. A further advantage of the invention is that a single very small probability, e.g., a small value of the class probability value pC for one of the typing events, does not prevent that an associated character occurs in a relatively highly ranked string. This is in strong contrast to methods where merely the class having the highest probability is considered.

The so-derived text output can be the text data produced. However, it is possible, e.g., to let the user select the text data from the text output, e.g., letting the user select the string he or she intended to type from a set of strings constituting the text output.

For clarification: The term **"string"** as used in this text refers, in agreement with its common use, to a character sequence; a length of a string and character sequence, respectively, in terms of its number of characters, can be one or more. Nevertheless, in order to make possible to more simply distinguish between the set of strings / character sequences for which language probability values are estimated and the set of strings / character sequences comprised in the text output, the former is referred to as set of character sequences, and the latter is referred to as set of strings; even though some of the character sequences and strings, respectively, may, in instances, be identical.

And the term **"character"** as used in this text refers, in agreement with its common use (at least in computing), to units of information such as a letters, numerical digits, punctuation marks and whitespace. In instances, it can also include control characters, such as carriage return or tab.

The invention can be widely applied. For example, it can be used for text entry in a mixed reality or virtual reality or artificial reality or augmented reality scenario; or for complementing other devices, e.g., screen-bearing devices, such as smartphones or tablet computers or other computing devices. And it can be used, in some embodiments, where visual feedback is not desired or is not available to the user. Other uses emerge from further features and embodiments described in this text.

The described **system** can also be considered a kit of parts.

The system can comprise, e.g., one or more interconnected computer systems and, in addition and operatively connected thereto, the sensing unit.

In some embodiments, the system comprises at least one computer system comprising a memory unit in which the text output and the text data are stored.

The **limb motions** can be, e.g., hand motions, leg motions, finger motions or others; in particular motions of a limb of a human being. Specifically, in some embodiments, the limb motions comprise finger motions of a user, in particular motions of fingers of both hands of the user.

In some embodiments, the limb motions comprise a user's finger tapping on a surface.

The **sensing unit** can comprise two or more sensors. In that case, the sensor data stream can be a multi-channel data stream.

The sensing of the limb motions can be accomplished using one or more different techniques. For example, a sensor of one of the following types can be comprised in the sensing unit. In particular, two or more different ones of the sensor types can be combined in the sensing unit. This can make the sensing more robust and/or more sensitive.

In some embodiments, the sensor is a sensor for **acceleration** sensing, in particular along three orthogonal axes. E.g., the sensor can be mounted to a finger of a user, for sensing motions of a finger as the limb motions; or it can be mounted to a wrist or arm of a user, for sensing motions of the wrist or arm, wherein these motions are related to motions of fingers of the hand belonging to the wrist and arm, respectively, such that finger motions can be sensed this way.

In some embodiments, the sensor is a sensor for **gyroscopic** sensing, in particular around three orthogonal axes, e.g., one of the axes running along a user's arm. And the sensor can be mounted to a wrist or arm of a user. For example, rotational rates obtained by the sensor can result from wrist motions, which again can depend on finger motions. The wrist motions can include small vibrations which propagate through human bones, muscles, tendons and tissue.

In some embodiments, the sensor is a sensor for **pressure** sensing. E.g., a pressure sensor can be mounted to a wearable assembly, so that it can be in contact with the wearer's (user's) arm or wrist, more particularly to skin of the arm and wrist, respectively. From subtle changes in pressure (contact pressure), finger motions can be resolvable, since motions of the sensor (resulting from acceleration and inertia of the sensor) as well as vibrations propagating through the human body (through bones, tendons, muscles, tissue), can result in pressure changes detectable by the sensor, and said motions and vibrations can depend on the finger motions.

In some embodiments, the sensor is a sensor for **proximity** sensing. Such a sensor can be integrated in a wearable fixture, in order to determine the proximity of the wearer's (user's) skin, e.g., to determine the distance from the sensor to the skin. Said proximity and distance, respectively, can depend on finger motions. Motions and vibrations as described above can lead to changes in the proximity and distance, respectively. The sensor can function, e.g., optically, such as by illuminating the tissue with light and determining the amount of reflected light, which depends on said motions and vibrations.

In some embodiments, the sensor is a sensor for **capacitive** sensing. For example, the sensor can be mounted relative to a wrist or an arm of a user, e.g., wherein the sensor is mounted in a wearable strap. In one embodiment, a distance to the user's skin is detected, in another embodiment, movements of objects (tendons, muscles) underneath the user's skin are detected. Motions and vibrations as described above can depend on finger motions and can lead to changes in the detected distance and movement, respectively, which thus can be detected.

In some embodiments, the sensor is a sensor for **electromyographic** sensing. By electromyography, muscle activity can be sensed. In particular, mounting the sensor such that muscle activity of muscles in a finger or in a wrist or in an arm of a user is detected, the sensor can detect movements of one or more of the user's fingers. It can be possible to identify by electromyography the finger which moved. And it can be possible to determine a force involved in the movement of the finger. The force can be significant when a finger of the user hits a surface such as a tabletop, making it relatively easy to detect typing events associated with a hit of a finger on a surface.

In some embodiments, the sensor is a sensor for **optical 2D** sensing, such as an imaging sensor, e.g., a digital video camera. Finger movements can be determined from the image data, e.g., by image processing.

However, in some other embodiments, the system is **free** from a sensor for optical 2D sensing.

In some embodiments, the sensor is a sensor for **optical 3D** sensing. Finger movements can be determined from the sensed depth information.

However, in some other embodiments, the system is **free** from a sensor for optical 3D sensing.

In some embodiments, the sensor is a sensor for **magnetic** sensing. For example, the sensor can be mounted to the user's finger, wrist or arm, while sensing a magnetic field surrounding the sensor, e.g., the earth's magnetic field, or, e.g., another inhomogeneous time-constant magnetic field. That magnetic field as sensed by the sensor can depend on the position of the sensor relative to the magnetic field. Thus, motions and vibrations related to the finger motions can be detectable.

In some embodiments, the sensor is a sensor for **electrical field** sensing. The sensor can be mounted, e.g., to a user's finger, wrist or arm and can pick up electric fields from surrounding items such as nearby appliances, electrical devices, power lines and others. In view of the user's body acting as an antenna, position changes of the sensor result in changes of the sensed electrical field. Accordingly, the sensor can be used to detect motions of user's limbs.

In some embodiments, the sensor is a sensor for **ultrasound-**based sensing. The sensor can be mounted, e.g., on a user's wrist, hand or arm. By ultrasound-based sensing, interior structure of the wearer's (user's) wrist, hand or arm can be determined. Since shifts in muscles, tissue, bones of the user's wrist, hand or arm are induced by actuation of a user's finger, motions of the user's fingers can be detected this way.

In some embodiments, the sensor is a sensor for **acoustic** sensing. In particular, the sensor can comprise a surface microphone. The sensor can be attached to a user's skin, in particular skin of the user's hand, wrist or arm, so as to sense vibrations existing at the user's skin. Said vibrations can depend on movements of the user's fingers.

In some embodiments, the sensor is a sensor for **radar** sensing. Movements of the user's fingers or of a user's hand or wrist or arm can be detectable by radar sensing. Movements of the user's hand or wrist or arm depend on finger movements.

In particular, the sensing unit can comprise a first 3-axis acceleration sensor, in particular for sensing movements of a user's left wrist, and a second 3-axis acceleration sensor, in particular for sensing movements of a user's right wrist.

In some embodiments, the sensing unit comprising a first sensor, e.g., a first 3-axis acceleration sensor, and a second sensor, e.g., a second 3-axis acceleration sensor, and a first **fixation** means for firmly mounting the first sensor relative to a human **wrist** and a second fixation means for firmly mounting the second sensor relative to a human wrist.

This can facilitate identifying finger movements, in particular tapping actions, e.g., as described in the publication by M. Meier et al, mentioned above.

Instead of the wrist, e.g., a hand or an arm could be used.

In case the **event detector** receives a data stream derived from the sensor data stream, e.g., a **preprocessing unit** may accomplish the deriving by preprocessing the sensor data stream.

The event detector can be realized, e.g., in form of electronic hardware or in form of a computer program installed on a computer system, or by a combination thereof.

In some embodiments, the event **detector and the classifying unit** are distinct from one another.

In some embodiments, the **event detector and the classifying unit** are partially identical to one another.

In some embodiments, the **event detector and the classifying unit** are fully identical to one another.

In the latter two cases, classification may be used for identifying the typing event portions.

The herein-described **events** (typing events, tapping events, control events) can be, in particular, limb-motion-related events, more particularly, the events can constitute a limb motion each, more specifically, a limb motion intended by a user to mean an input to the system, such as, in case of a typing event, a limb motion intended by a user to mean a typing of a character, e.g., the limb motion constituting a typing action.

In some embodiments, the system comprises a surface, e.g., a solid surface, in particular a surface on which a user can tap with his or her fingers. This way, the user can receive a haptic feedback during typing. The surface can be, e.g., a surface of a table, of a wall, of a book, of a closed laptop, of a human body such as of a leg, of an arm, of a torso.

Analogously, in some embodiments, the method comprises a user carrying out the limb motions, in particular wherein the limb motions comprise a finger of the user tapping on a surface. e.g., on a surface as described above.

In some embodiments, the event detector is configured for identifying **portions** of the input data stream, referred to as **tapping event portions,** which are indicative of a **tapping event** each, more particularly wherein a tapping event is an event related to a **limb motion constituting a tapping action of a finger, in particular a human finger, on a surface, in particular on a solid surface.** The surface may in particular be a passive surface.

Such tapping events often to show up in the input data stream in form of a strong change in the signal, which simplifies their identification. Corresponding ways of event detection which can be applied, are described, e.g., in the publication by M. Meier et al. mentioned above.

If the user taps on a surface when intending to type a character, this also provides a haptic feedback to the user, which again improves acceptance and usability of the invention.

In such embodiments, the event detector furthermore can be configured for identifying a typing event portion with the aid of an identified tapping event portion. E.g., after identification of a tapping event, a portion of the input data stream extending timewise before and after the identified tapping event portion, e.g., by predetermined time spans, can be identified as the typing event portion.

Each of the **portions** of the input data stream identified by the event detector can in particular be a **contiguous** portion. This can apply, in particular to the typing event portions. And it can apply to the tapping event portions.

The herein-described **event classes** (typing event classes, tapping event classes, control event classes) can be, in particular, classes of events, more particularly classes of limb motions.

The set of typing event classes usually comprises at least two typing event classes.

Accordingly, in some embodiments, for each of the typing event portions, at least two class probability values are estimated, and the deriving of the text output is accomplished in dependence of at least two class probability values per typing event portion.

In some embodiments, the classifying unit comprising a **computer system** on which a **machine learning algorithm,** in particular a **neural network** algorithm, more particularly a **Bayesian** neural network algorithm, is implemented which is trained for accomplishing the classifying carried out by the classifying unit. This can apply to the classification of typing event portions, of control event portions, and of tapping event portions.

Bayesian neural network algorithms are particularly well suited for estimation of probabilitites such as the class probability values.

In particular, the algorithm is **trained** with **training data sets** comprising
- typing event portions and associated typing event class identifiers.

It can be provided, in addition. that the algorithm is **trained** with **training data sets** comprising
- control event portions and associated control event class identifiers;
and/or with **training data sets** comprising
- tapping event portions and associated tapping event class identifiers.

In other words, the algorithm can be trained with training data sets which comprise a plurality of respective event portions and, for each of the respective event portions, data which identify a class into which the respective event portion is to be classified (event class identifier).

In some embodiments, the **Bayesian** neural network algorithm is trained using **variational inference.**

Each of the **sets of character sequences** usually comprises at least two character sequences. In instances, a character sequence can comprise one or more words, or a phrase.

A length of the character sequences in terms of its number of characters can be determined according to need and circumstances. However, for each of the sets of character sequences (derived for one of the typing event portions) the length of the character sequences comprised in the set is usually identical.

In some embodiments, for each of the typing event portions, the deriving of the character sequences of the respective set of character sequences is accomplished in dependence of
- the respective received class probability values; and
- the mapping data.

This way, the number of character sequences in a set can be reduced at no or negligible loss of quality of the text output, such as by non-inclusion of, e.g., character sequences merely comprising characters having a negligible probability, e.g., as derived from said sum over product pCᵢ ^{∗} pMᵢ described above. Accordingly, computing time can be reduced, enabling a faster response of the system.

More particularly, and referring to the first view of the invention, for the n-th typing event portion, the deriving of the character sequences of the respective set of character sequences can be accomplished in dependence of
- the class probability values received for any of the first to n-th successive typing event portions; and
- the mapping data.

In some embodiments, the **language decoding unit** comprises a computer system on which a computer program is installed which, when executed on the computer system, implements the functions described for language decoding unit.

The **language model unit** can be configured, in particular, for determining, for each of the character sequences, a language probability value indicative of a probability of occurrence of the respective character sequence in a natural language, in particular in a specific natural language, such as in English.

In some embodiments, the language model unit comprises a **computer system** on which a **machine learning algorithm,** in particular an **n-gram language model** or a **deep learning algorithm,** is implemented, in particular wherein the machine learning model is trained for estimating **probabilities of occurrence** of character sequences, e.g., in natural language, as described above.

In some embodiments, the **text output** comprises a set of strings, e.g. a list of strings. In particular, such a set can be outputted to a user after each typing event, and furthermore, it can be provided that a user can select a string from such a set. This will be described more closely below.

In some embodiments, the system further comprises a **display unit** for displaying the text outputs to a user.

This way, the user receives feedback to his or her limb motions. The user can observe results produced by the system in response to the limb motions.

In some embodiments, this is a display unit for **visually** displaying the text outputs to a user. The display unit can in this case comprise, e.g., an LED display or an OLED display or a projector.

In some embodiments, it is a display unit for **auditively** displaying the text outputs to a user. The display unit can in this case comprise, e.g., a text-to-speech converter and a headphone or a loudspeaker and an amplifier.

In some embodiments, it is a display unit for **haptically** rendering the text outputs to a user. The display unit can in this case comprise, e.g., a text-to-Braille converter and a braille terminal (refreshable braille display). Or it can comprise a moving, e.g., vibrating actuator encoding the text outputs in form of the movement and vibration, respectively.

In some embodiments, the system is free from visual feedback, more particularly free from visual feedback displaying any of
- the sets of character sequences;
- the text output;
- the text data.

Accordingly, in some embodiments, the method is free from providing a visual feedback, more particularly free from displaying any of
- the sets of character sequences;
- the text output;
- the text data.

The mapping data associate typing event classes with characters, which is equivalent to that the mapping data associate characters with typing event classes. Accordingly. instead of writing "mapping data associating each of the typing event classes with one or more characters", one could as well write "mapping data associating one or more characters with each of the typing event classes" or more clearly: "mapping data associating, for each of the typing event classes, one or more characters with the respective typing event class".

In some embodiments, by the mapping data, at least one of the characters is associated with two or more typing event classes.

For example, the mapping data can map each of the characters onto one or more typing event classes, e.g., like given by a touch-type scheme for a standard keyboard.

In some embodiments, by the mapping data, at least one of the typing event classes is associated with two or more characters.

For example, the mapping data can map each of the typing event classes onto one or more characters, e.g., like given by a touch-type scheme for a standard keyboard.

In some embodiments, the mapping data map each character of a set of characters onto at least one of the typing event classes. This can be particularly useful in conjunction with mapping probability values as explained below. The set of characters can comprise, e.g., letters and numerical digits and punctuation marks.

It can be particularly advantageous to include a probability (mapping probability value) in the mapping of a typing event class onto a character. E.g., in a simplified example, a value of 60% could be assigned to the probability that a certain character, such as "2" is associated with a first typing event class which is representative of a tapping of the left ring finger while the left ring finger is stretched in a forward direction, and a probability of 25% could be assigned to the probability that the character ("2") is associated with a second typing event class which is representative of a tapping of the left ring finger while the left ring finger is in an unstretched position. And a probability of 0% or of near 0% could be assigned to the probability that the character ("2") is associated with still another typing event class which is representative of a tapping of the right index finger. More particularly:

In some embodiments, the mapping data comprise, for each of the characters and for each of the respective one or more associated typing event classes, a **mapping probability value.**

In an example, each of the mapping probability values concerns a specific character being mapped onto a specific typing event portion. And more particularly, each of the mapping probability values is related to, e.g., is indicative of a probability that a user, when intending to type said specific character, carries out a limb motion to be classified into said specific typing event class. Still more particularly,it can be related to, e.g., is indicative of, a probability that a user, when intending to type said specific character, carries out a limb motion resulting in a typing event portion to be classified into said specific typing event class. Said limb motion can be, e.g., a limb motion constituting a typing action for typing said specific character, more particularly a typing action for typing the respective character on an imaginary (fictive) keyboard by typing on a surface free from human-perceivable indications of the imaginary keyboard, e.g., there are no human-perceivable keys, no human-perceivable indications of characters on said surface.

The mapping probability values can be, e.g., estimated probabilities or probabilities determined from trials with the user or with one or more users.

An improved text output can be derived if, in addition, an **uncertainty** is considered which in particular can be understood as a measure for the degree of confidence (confidence level) of an estimation of a class probability value. More particularly:
In some embodiments, the classifying unit is furthermore configured for estimating and outputting, for each of the outputted class probability values
- an **uncertainty value** indicative of an **uncertainty** of the respective class probability value; and
wherein the language decoding unit is furthermore configured for receiving the uncertainty values, and the deriving of the n-th text output is accomplished in further dependence of the uncertainty values which are associated with class probability values associated with one of the first to n-th typing event portions.

This additional information, i.e. the estimated confidence of the class probability values, is very valuable for an even further improved deriving of the text output. For example, it can be used for balancing the impact on the derived text output of the class probability values and of the language probability values. In other words, the uncertainty values can be used for weighting the influence of the class probability values on the deriving of the text output versus the influence of the language probability values on the deriving of the text output. The same applies for the common uncertainty values mentioned below.

Alternatively, the classifying unit is furthermore configured for estimating and outputting, for each of the typing event portions,
- a **common uncertainty value** indicative of an **uncertainty** of the outputted class probability values associated with the respective typing event portion; and
wherein the language decoding unit is furthermore configured for receiving the uncertainty values; and wherein the deriving of the n-th text output is accomplished in further dependence of each of the common uncertainty values which are associated with one of the first to n-th typing event portions.

A common uncertainty value is identical for all class probability values associated with a single typing event portion.

In some embodiments, the system comprises a **control unit** configured for determining **control commands** from **user input** to the system. In some embodiments, the user input is recceived by a user interface of the system, such as a touch screen. However, the user input can also be, in some embodiments, received (and detected) by the sensing unit, cf. below.

In some embodiments, the control commands comprise a **selecting command.** A selecting command can be a command for selecting a specific item from a set of items. E.g., it can mean to select a 3^{rd} item from a list of items, or to select a currently displayed item of a set of items.

In some embodiments, each of the text outputs comprises a **set of strings,** and the control commands comprise a **selecting command** for selecting a specific string from the set of strings. And the text data can comprise the selected string. Usually, the number of strings in the set of strings can be two or more.

Accordingly, in some embodiments, each of the text outputs comprises a **set of strings,** and the control unit is configured for controlling the system, if the determined control command is a **selecting command,** so as to select a specific string from the set of strings in accordance with the selecting command. And the text data can comprise the selected string. In particular, by the selecting command, the selected string can be attributed to the text data.

Thus, a set of strings, e.g., a list of strings, can be presented to the user who then can select one of them, namely in particular the one he or she intended to type. This can simplify the generating of the text data.

It can simplify the sytem and/or its operation if also the user input of control commands is accomplished by limb motions, in particular when the sensing unit is used for this purpose. More particularly:
In some embodiments, the user input comprises the limb motions, and
- the **event detector** is configured for identifying **portions,** in particular contiguous portions, of the input data stream, referred to as **control event portions,** which are indicative of a **control event** each;
- the **classifying unit** is configured for classifying each of the control event portions into a **set of control event classes** and for outputting, for each of the control event portions, the control event class into which the respective control event portion has been classified;
- the **control unit** is configured for determining, for each of the control event portions, a **control command** associated with the respective control event portion, wherein the determining is accomplished in dependence
   - of the control event class outputted from the classifying unit; and
   - of **further mapping data** associating each of the control event classes with a control command; and
- the control unit is configured for **controlling the system** in accordance with the determined control command.

Thus, a user can enter control commands to the system by limb motions sensed by the sensing unit, by the same at least one sensor and/or possibly also by one or more further sensors; including identifying control event portions in the sensor data stream and classifying these into a set of control event classes and determining a control command in dependence of the result of the classification and in dependence of further mapping data which, e.g., associate each of the control event classes with at least one control command.

The control event classes can in particular be classes of control events.

The event detector and the classifying unit can be comprised in the control unit.

It can be advantageous to provide that limb motions for entering control events, are strongly different from limb motions for entering characters. More particularly, it can be advantageous to provide that limb motions are selected such, that control event portions can be well distinguished from typing event portions.

The **text data** can be, e.g., stored in the system, such as in a memory unit of the system. They can be used in one or more of various way, such as they can be transmitted to an entity distinct from but operationally connected to the system, they can be displayed to the user by the display unit, e.g., in addition to or separately from the text output.

Note: When an item is described to be "configured" for carrying out a step, this means that concrete measures have been taken which factually enable the item to carry out the step. For example, dedicated program code is implemented enabling the item to carrying out the step when the program code is executed. Thus, this does not include, e.g., the mere suitability to (possibly) make the item carry out the step, as may be the case for a computer without a dedicated program code.

As will be readily understood, features mentioned herein with respect to a method can analogously apply for a described system as well. And, vice versa, features mentioned herein with respect to a system can analogously apply for a described method as well. The achievable effects correspond to one another.

The invention comprises systems with features of corresponding methods according to the invention, and, vice versa, also methods with features of corresponding systems according to the invention.

Further embodiments and advantages emerge from the following description and the enclosed figures and from the dependent claims.

Below, the invention is described in more detail by means of examples and the included drawing. The figure shows:

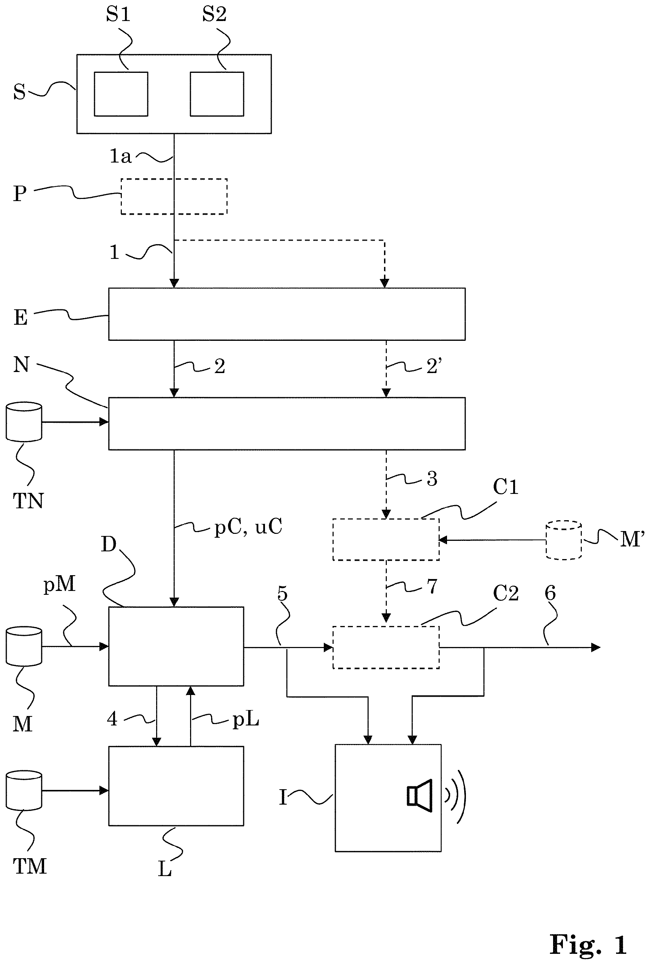

- Fig. 1: a strongly schematized and symbolic illustration of the system and the method for generating text data from limb motions.

The described embodiments are meant as examples or for clarifying the invention and shall not limit the invention.

Fig. 1 shows a strongly schematized and symbolic illustration of a system and the method for generating text data from limb motions. Many details and possible embodiments and features have been described above already, so that many of these will not be repeated here. Please refer to the text further above for such details.

The system comprises a sensing unit S which may, in the illustrated case, comprise two sensors S1, S2, each configured for producing a sensor data stream 1a in response to the limb motions. E.g., the sensors S1, S2 are each firmly applied to a user's left and right wrist (or arm or hand), respectively, sensing wrist (or arm or hand) movements, e.g., by means of accelerometry and/or gyroscopes.

The sensor data stream 1a itself or a preprocessed version thereof, preprocessed by preprocessing unit P, is fed to the an event detector E as an input data stream 1. In input data stream 1, typing event portions 2 are detected, e.g., by means of detecting tapping event portions. A typing event portion can be, e.g., a section of the input data stream 1, covering a certain time span.

The typing event portions 2 are fed to classifying unit N, e.g., comprising an implementation of a Bayesian neural network algorithm, for classifiying each typing event portion 2 into a set of typing event classes. For example, each typing event class can be associated with a certain movement of a certain finger of the user wearing the sensing unit S. The Bayesian neural network algorithm can have been trained with training data TN, e.g., comprising training data sets comprising many typing event portions and an associated typing event class identifier for each typing event portion indicating how the respective typing event portions are to be classified.

For each of the typing event classes, classifying unit N estimates a class probability value pC indicating the probability that the respective typing event portion 2 is correctly classified into the respective typing event class.

Optionally, classifying unit N also estimates, for each typing event portion 2, an uncertainty value uC (common uncertainty value) or several uncertainty values uC, namely one per typing event class and thus, one per class probability value pC.

A language model unit L estimates a probability pL (language probability value) of occurrence of inputted character sequences, e.g., in the English language.

A language decoding unit D derives several character sequences for each typing event portion 2, possibly in dependence of the respective class probability value pC and usually in furtherance in dependence of the history, such as in dependence of earlier typing event portions 2 and their respective probability values pC.

For each typing event portion 2, the language decoding unit D transmits a set 4 of such character sequences to the language model unit L and receives back a language probability value pL for each character sequence of the set.

Language decoding unit D has access to mapping data M interrelating each of the typing event classes with one or more characters or interrelating each of the characters with one or more typing event classes, e.g., including, for each character a mapping probability value pM per associated typing event class.

Now, for each typing event portion 2, language decoding unit D derives a text output 5, such as a list of strings, namely in dependence of
- the set 4 of character sequences associated with the typing event portion and the respective language probability value pL, and optionally also the sets of character sequences associated with any of the earlier typing event portions and the respective language probability values pL;
- the mapping data M;
- the class probability values pC associated with the typing event portion; and, depending on circumstances:
- class probability values pC associated with one or more earlier typing event portions 2; and optionally
- the common uncertainty value uC associated with the typing event portion 2, or the several uncertainty values uC (one per probability value pC) associated with the typing event portion 2.

The text output 5 may be displayed, e.g., auditively, by a display unit I. This way, the user can perceive results of his or her limb motions.

It can be provided that text output 5 comprises a set of strings, such as a selection from the set of character sequences derived by language decoding unit D, e.g., those which have the highest overall probabilty, such as a probability obtained from the language probability value pL, the class probability values pC, the mapping data M and optionally also from the class uncertainty values uC or common class uncertainty values uC. The user may be provided with the possibility to select one of the strings of the set of strings, in particular the one he or she had intended to type.

The selected string can then be included in the text data 6 generated by the system.

An exemplary possibility for the user to select one of the strings is illustrated in Fig. 1:
The system may comprise a control unit which may comprise a subunit C1 and a subunit C2. In addition, event detector E and classifying unit N can be comprised in the control unit.

The user can, in this example, provide commands to the system by limb motions.

Evaluation unit E can furthermore identify in input data stream 1 control event portions 2', which are indicative of a control event each. And classifying unit N can furthermore classify each of the control event portions into a set of control event classes 3.

Based on further mapping data M' associating each of the control event classes with a control command 7, subunit C1 determines which control command 7 is associated with respective ones of the control event portions 2'.

The command (in the illustrated case: a selection command, such as the command to select the string which has been presented by the display unit I most recently) is transmitted to subunit C2 to accomplish that the command is carried out. I.e. subunit C2 would in this case select the most recently displayed string and include it in the text data 6. And, as illustrated in Fig. 1, text data 6 can also be displayed by display unit I, e.g., in addition to or highlighted in the text output 5 displayed in display unit I.

Items which are drawn separately in Fig. 1 need not be separately implemented but can be implemented in a common unit, and vice versa. For example, evaluation unit E and classifying unit N may be partially or completely identical. And various units of the system may be implemented in one and the same unit, such as on one and the same computer system.

Further details have already been described above.

## Claims

1. **System** for generating **text data** from **limb motions,** comprising
- a **sensing unit** comprising at least one **sensor,** configured for producing a **sensor data stream** in response to the limb motions;
- an **event detector** configured for receiving the sensor data stream or a data stream derived therefrom as an **input data stream,** and for identifying **portions** of the input data stream, referred to as **typing event portions,** which are indicative of a **typing event** each;
- a **classifying unit,** configured for classifying each of the typing event portions into a **set of typing event classes** and for estimating and outputting, for each of the typing event portions, and for each of the typing event classes,
- a probability, referred to as **class probability value (pC),** that the respective typing event portion is to be classified into the respective typing event class;
- a **language model unit;**
- a **language decoding unit** configured for receiving the class probability values (pC) for each of the typing event portions and for deriving, for each of the typing event portions, a **set of character sequences,** and for outputting the sets of character sequences to the language model unit;
the language model unit being configured for estimating, for each of the character sequences, a probability, referred to as **language probability value (pL),** related to a probability of occurrence of the respective character sequence, and for outputting the language probability values to the language decoding unit;
the language decoding unit being configured
(a) for receiving the language probability values (pL); and
(b1) for deriving, provided a **set of N successive typing event portions** is identified by the event detector, N being an integer with N ≥ 1, a **text output** for each of the N successive typing event portions, the successive typing event portions being referred to as first to N-th typing event portion in accordance with their succession in time, the corresponding text outputs being referred to as first to N-th text output, wherein the deriving of an n-th text output, n being an integer with 1 ≤ n ≤ N, is accomplished in dependence of
- the set of character sequences associated with the n-th typing event portion;
- for each of the character sequences of the set of character sequences associated with the n-th typing event portion: the respective language probability value (pL);
- the class probability values (pC) associated with the first to n-th typing event portions;
- **mapping data** associating each of the typing event classes with one or more characters;
the text data being comprised in at least one of the text outputs.

2. The system according to claim 1,
(I) wherein the classifying unit is furthermore configured for estimating and outputting, for each of the outputted class probability values (pC)
- an **uncertainty value** indicative of an **uncertainty** of the respective class probability value; and
wherein the language decoding unit is furthermore configured for receiving the uncertainty values and the deriving of the n-th text output is accomplished in further dependence of the uncertainty values which are associated with the class probability values (pC) associated with one of the first to n-th typing event portions; or
(II) wherein the classifying unit is furthermore configured for estimating and outputting, for each of the typing event portions,
- a **common uncertainty value** indicative of an **uncertainty** of the outputted class probability values associated with the respective typing event portion; and
wherein the language decoding unit is furthermore configured for receiving the uncertainty values and the deriving of the n-th text output is accomplished in further dependence of each of the common uncertainty values which are associated with one of the first to n-th typing event portions.

3. The system according to claim 1 or claim 2, the mapping data comprising, for each of the typing event classes and for each of the respective one or more associated characters, a **mapping probability value (pM),** in particular wherein each of the mapping probability values (pM) concerns to a specific character being mapped onto a specific typing event portion and is related to a probability that a user, when intending to type said specific character, carries out a limb motion to be classified into said specific typing event class.

4. The system according to one of the preceding claims, wherein for each of the typing event portions, the deriving of the character sequences of the respective set of character sequences is accomplished in dependence of
- the respective received class probability values (pC); and
- the mapping data;
more particularly wherein for the n-th typing event portion, the deriving of the character sequences of the respective set of character sequences is accomplished in dependence of
- the class probability values (pC) received for any of the first to n-th successive typing event portions; and
- the mapping data.

5. The system according to one of the preceding claims, the sensing unit comprising a first sensor and a second sensor and a first fixation means for firmly mounting the first sensor relative to a human wrist or hand or arm and a second fixation means for firmly mounting the second sensor relative to a human wrist or hand or arm, the sensor data stream being a multi-channel data stream comprising a first data stream from the first sensor and a second data stream from the second sensor, in particular wherein the event detector is configured for identifying **portions** of the input data stream, referred to as **tapping event portions,** which are indicative of a **tapping event** each, and for identifying a typing event portion with the aid of an identified tapping event portion, more particularly wherein a tapping event is an event related to a **limb motion constituting a tapping action of a finger onto a surface,** in particular on a passive surface.

6. The system according to one of the preceding claims, further comprising a **display unit** for displaying the text outputs to a user, in particular for **visually** displaying the text outputs to a user or for **auditively** displaying the text outputs to a user or for haptically rendering the text outputs to the user.

7. The system according to one of the preceding claims, comprising a **control unit** configured for determining **control commands** from **user input** to the system; in particular wherein the control commands comprise a **selecting command** for selecting a specific item from a set of items; more particularly wherein each of the text outputs comprises a **set of strings,** and the control commands comprise a **selecting command** for selecting a specific string from the set of strings, the text data comprising the selected string.

8. The system according to claim 7, wherein the user input comprises the limb motions, and wherein
- the **event detector** is configured for identifying **portions** of the input data stream, referred to as **control event portions,** which are indicative of a **control event** each;
- the **classifying unit** is configured for classifying each of the control event portions into a **set of control event classes** and for outputting, for each of the control event portions, the control event class into which the respective control event portion has been classified;
- the control unit is configured for determining, for each of the control event portions, a **control command** associated with the respective control event portion, wherein the determining is accomplished in dependence
- of the control event class outputted from the classifying unit; and
- of **further mapping data** associating each of the control event classes with a control command; and
- the control unit is configured for **controlling the system** in accordance with the determined control command.

9. The system according to claim 7 or claim 8, wherein each of the text outputs comprises a **set of strings,** and wherein the control unit is configured for controlling the system, if the determined control command is a **selecting command,** so as to select a specific string from the set of strings in accordance with the selecting command, the text data comprising the selected string.

10. The system according to one of the preceding claims, the classifying unit comprising a **computer system** on which a **machine learning algorithm,** in particular a **neural network** algorithm, more particularly a **Bayesian** neural network algorithm, is implemented which is trained for accomplishing the classifying carried out by the classifying unit.

11. The system according to one of the preceding claims, the language model unit comprising a **computer system** on which a **machine learning algorithm,** in particular an **n-gram language model** or a **deep learning algorithm,** is implemented, in particular wherein the machine learning model is trained for estimating **probabilities of occurrence** of character sequences.

12. A method for generating **text data** from **limb motions,** comprising
- **sensing** the limb motions;
- producing a **sensor data stream** in response to the sensing;
- **identifying** in an **input data stream,** which is the sensor data stream or a data stream derived from the sensor data stream, **portions** of the input data stream, referred to as **typing event portions,** which are indicative of a **typing event** each;
- **classifying** each of the typing event portions into a **set of typing event classes;**
- **estimating** for each of the typing event portions, and for each of the typing event classes,
- a probability, referred to as **class probability value (pC),** that the respective typing event portion is to be classified into the respective typing event class;
- **deriving,** for each of the typing event portions, a **set of character sequences;**
- **estimating,** for each of the character sequences, a probability referred to as **language probability value (pL),** related to a probability of occurrence of the respective character sequence;
(B3) **deriving,** for at least one of the typing event portions referred to as **recent-most typing event portion,** a **text output** in dependence of
- the set of character sequences associated with the recent-most typing event portion;
- for each of the character sequences of the set of character sequences associated with the recent-most typing event portion: the respective language probability value (pL);
- **mapping data** associating each of the typing event classes with one or more characters;
- the class probability value (pC) associated with the recent-most typing event portion; and
- the one or more class probability values (pC) associated with one or more typing event portions identified earlier in the input data stream, referred to as **earlier typing event portions;**
wherein the text data are comprised in the text output.

13. The method according to claim 12, comprising
(I) estimating, for each of the class probability values (pC), an **uncertainty value** indicative of an **uncertainty** of the respective class probability value (pC), and wherein the deriving of the text output is accomplished in further dependence
- of the uncertainty values associated with the class probability values (pC) associated with the recent-most typing event portion; and
- of the one or more uncertainty values associated with a respective one of the one or more class probability values (pC) associated with one of the earlier typing event portions; or
(II) estimating, for each of the typing event portions, a **common uncertainty value** indicative of an **uncertainty** of the class probability values associated with the respective typing event portion, and wherein the deriving of the text output is accomplished in further dependence
- of the common uncertainty value associated with the recent-most typing event portion; and
- of the one or more common uncertainty values associated with one of the earlier typing event portions.

14. The method according to claim 12 or claim 13, comprising **visually** or **auditively** displaying the text outputs to a user.

15. The method according to one of claims 12 to 14, wherein the text output comprises **a set of strings,** the method furthermore comprising
- detecting **user input** to the system;
- determining one or more **control commands** from the user input;
- determining whether or not the one or more control commands comprise a **selecting command;**
- if the one or more control commands comprise a selecting command: selecting a specific string from the set of strings in accordance with the selecting command;
the text data comprising the selected string.
